# EUROPEAN PATENT SPECIFICATION

(11) **EP 2 194 407 B1**
(45) Date of publication and mention of the grant of the patent: **19.11.2014**
(21) Application number: 08170737.4
(22) Date of filing: 04.12.2008
(51) Int. Cl.: G02B 6/00, F21K 99/00

(54) **Flicker-Less Light Source**
Flimmerfreie Lichtquelle
Source lumineuse sans scintillement

(43) Date of publication of application: 09.06.2010
(73) Proprietor: Pixon Technologies Corp., Hsien-Tien City, Taipei Hsien (TW)
(72) Inventor: Wu, Rong-Yaw, Hsin-Tien City Taipei Hsien (TW); Hsu, Ai-Lan, Hsin-Tien City Taipei Hsien (TW)
(74) Representative: Lermer, Christoph

(56) References cited:
- WO-A-01/40702
- GB-A- 2 435 937
- US-A- 5 982 092
- US-A1- 2007 115 683
- US-A1- 2007 217 227
- US-B1- 6 519 401
- US-B1- 7 228 052

## Description

### BACKGROUND OF THE INVENTION

### Field of the Invention

The present invention relates to a light source. More specifically, the present invention discloses a flicker-less light source that is safe to humans, environmentally friendly, and possesses an extremely long lifetime.

### Description of the Prior Art

Fluorescent lights are a commonly used light source. In a fluorescent light an electric current stimulates mercury atoms. The stimulation causes the mercury atoms to release ultraviolet photons which stimulate a phosphor. The stimulated phosphor then emits visible light photons.

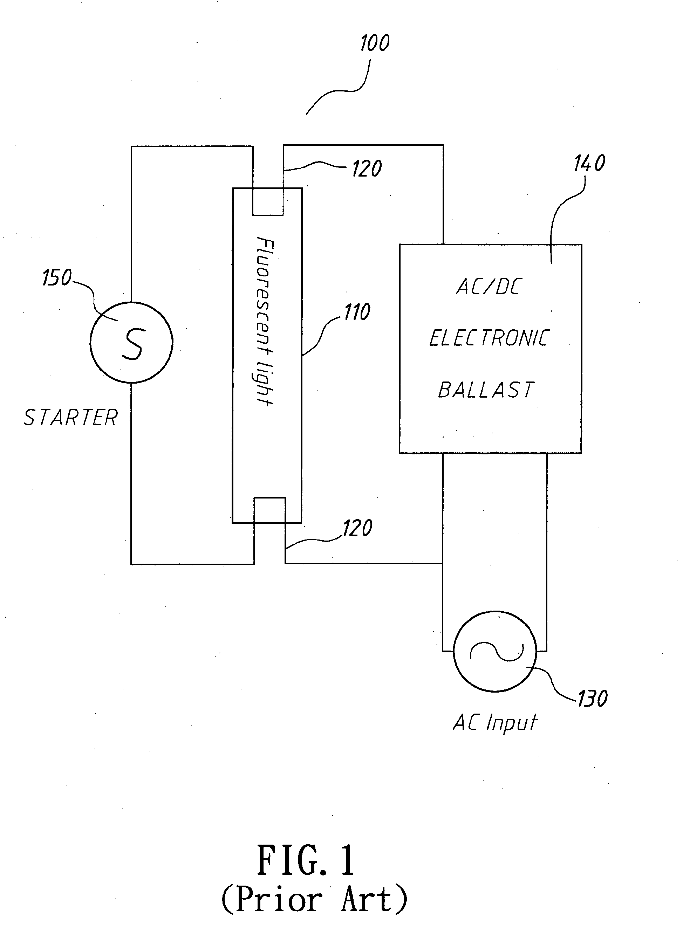

Refer to Figure 1, which is a drawing illustrating a conventional fluorescent light installation. As shown in Figure 1, a conventional fluorescent light installation 100 consists of a sealed glass tube 110 containing a small amount of mercury and inert gas with a phosphor powder coating on the inside of the glass tube 110. An electrode 120 is situated on both ends of the sealed tube 110. A starter 150 allows current to flow to turn on the fluorescent tube 110.

When alternating current 130 is applied electrons migrate through the gas from one end of the tube 110 to the other. As a result the liquid mercury turns into a gas. Collisions between electrons, charged atoms, and mercury atoms cause the electrons to move to a higher energy level. After a short period of time the electrons will return to their original energy level and release light photons.

Electrons in mercury atoms release light photons in the ultraviolet wavelength range which are not visible to humans. In order to convert the ultraviolet light into visible light the phosphor coating is used to release photons of a lower energy.

While fairly effective, the conventional fluorescent light source has numerous disadvantages. One disadvantage is that it can take several seconds for the fluorescent light to start emitting light.

Another disadvantage is that it is difficult to maintain a stable flow of current through the gas which in some cases can cause the light tube to explode or can destroy other components in the circuit.

Refer again to Figure 1. In order to control the current, a ballast 140 is used to slow down changes in the current by modulating the current at a low cycle rate. Unfortunately, this causes the light to flicker which is annoying and irritating.

Additionally, the ballast 140 can vibrate at a low frequency which is audible to humans and causes further irritation. Workers in environments using fluorescent light have filed complaints of headaches, eye strain, and general eye discomfort.

Furthermore, disposal of fluorescent light systems is problematic since some of the waste is hazardous. For example, some ballasts contain polychlorinated biphenyls (PCBs) or 2-ethylhexyl phathatlate (DEHP) which are carcinogens that can cause liver, skin, and reproductive disorders. Also, fluorescent light tubes contain a small quantity of mercury that can be harmful to the environment and to human health.

In order to properly dispose of the fluorescent light systems special care must be taken and special hazardous waste landfills must be used. This is not only expensive and potentially dangerous but also damaging to the environment.

Therefore, there is need for an improved light source to replace fluorescent light systems that is economical, effective, and safe to humans and the environment.

### SUMMARY OF THE INVENTION

To achieve these and other advantages and in order to overcome the disadvantages of the conventional method in accordance with the purpose of the invention as embodied and broadly described herein, the present invention provides a flicker-less and safe light source which is environmentally friendly.

An object of the present invention is to provide a light source to replace the conventional fluorescent light tube. The flicker-less light source of the present invention fits in a conventional light fixture so the light fixture does not need to be replaced in order to use the light source of the present invention. The flicker-less light source of the present invention replaces fluorescent light tube, tungsten lights, and incandescent light bulbs.

The light source of the present invention comprises a diffuser tube, a lightpipe inside the diffuser tube, and a light emitting diode (LED) light source positioned on one end or on each end of the diffuser tube.

Since the light source of the present invention utilizes LED light sources, the emitted light does not flicker and the light source turns on instantly without delay. Once turned on the light source immediately begins emitting a stable visible light. Not only is the light convenient but workers in the environment no longer suffer from discomfort such as headaches or sore eyes.

See also US 2007/0115683. It is an object of the present invention to provide a light source with an improved light distribution characteristics.

Additionally, the light source of the present invention does not contain mercury or other harmful materials making disposal of the light source easy and safe for the environment.

Another object of the present invention is to provide a low power light source that uses little electricity and has a long lifetime. This results in major cost savings for consumers.

Another object of the present invention is to provide a light source with selective wavelength conversion. The lightpipe is coated with a thin layer or layers of visible-light transparent material which is doped with organic dye molecules. The organic dye has strong light absorption characteristics in ultraviolet (UV) wavelength and certain short-wavelength visible spectral regions. In this way, the color or color temperature of the light emitted by the light source can be varied or controlled.

As a result, one type of LED light source can produce different light colors, brightness, intensities, or color temperatures. Therefore, manufacturers or suppliers only need to produce or stock one type of LED light source rather than a wide variety of light sources.

Another advantage of the present invention is that the light source of the present invention isn't pressurized. As a result, the light source of the present invention can't explode like a conventional fluorescent light tube.

These and other objectives of the present invention will become obvious to those of ordinary skill in the art after reading the following detailed description of preferred embodiments.

It is to be understood that both the foregoing general description and the following detailed description are exemplary, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings:
Figure 1 is a drawing illustrating a conventional fluorescent light installation;
Figure 2A is a drawing illustrating a flicker-less light source according to an embodiment of the present invention;
Figure 2B is a drawing illustrating an exploded view of a flicker-less light source according to an embodiment of the present invention;
Figure 3 is a drawing illustrating an LED light source according to an embodiment of the present invention;
Figure 4 is a drawing illustrating a diffuser tube of a flicker-less light source according to an embodiment of the present invention;
Figure 5A is a drawing illustrating a lightpipe of a flicker-less light source according to an embodiment of the present invention;
Figure 5B is a drawing illustrating a top view of a lightpipe with patterned surface according to an embodiment of the present invention;
Figure 5C is a drawing illustrating a side view of a lightpipe with patterned surface according to an embodiment of the present invention;
Figure 5D is a drawing illustrating an end view of a lightpipe with patterned surface according to an embodiment of the present invention;
Figure 6 is a drawing illustrating an assembly coupler according to an embodiment of the present invention; and
Figure 7 is a drawing illustrating a light source of the present invention installed in a conventional fluorescent light fixture.

### DESCRIPTION OF THE PREFERRED EMBODIMENTS

Reference will now be made in detail to the preferred embodiments of the present invention, examples of which are illustrated in the accompanying drawings. Wherever possible, the same reference numbers are used in the drawings and the description to refer to the same or like parts.

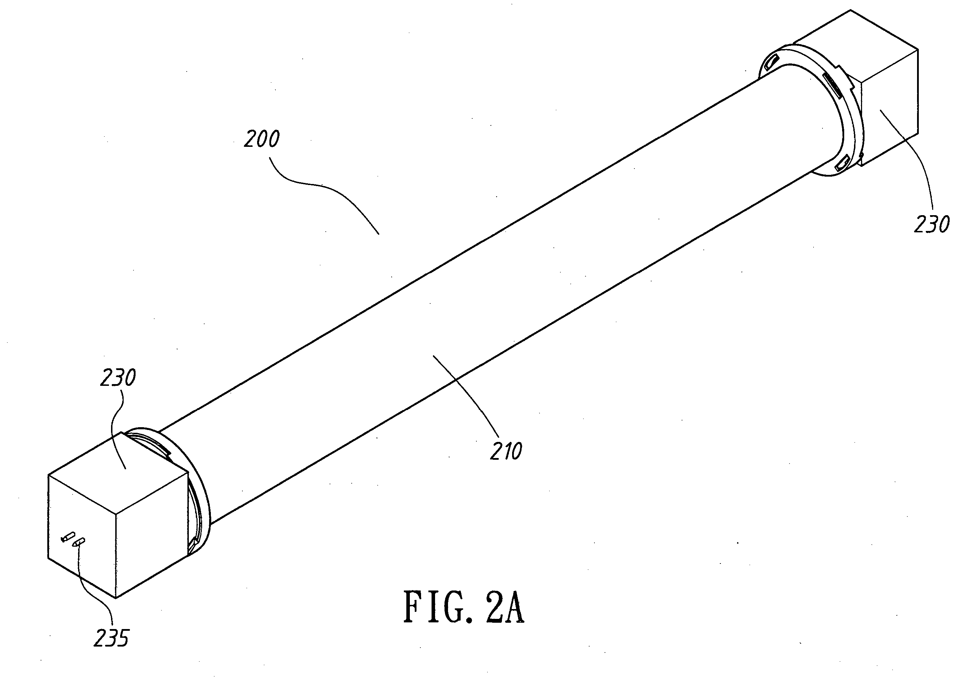

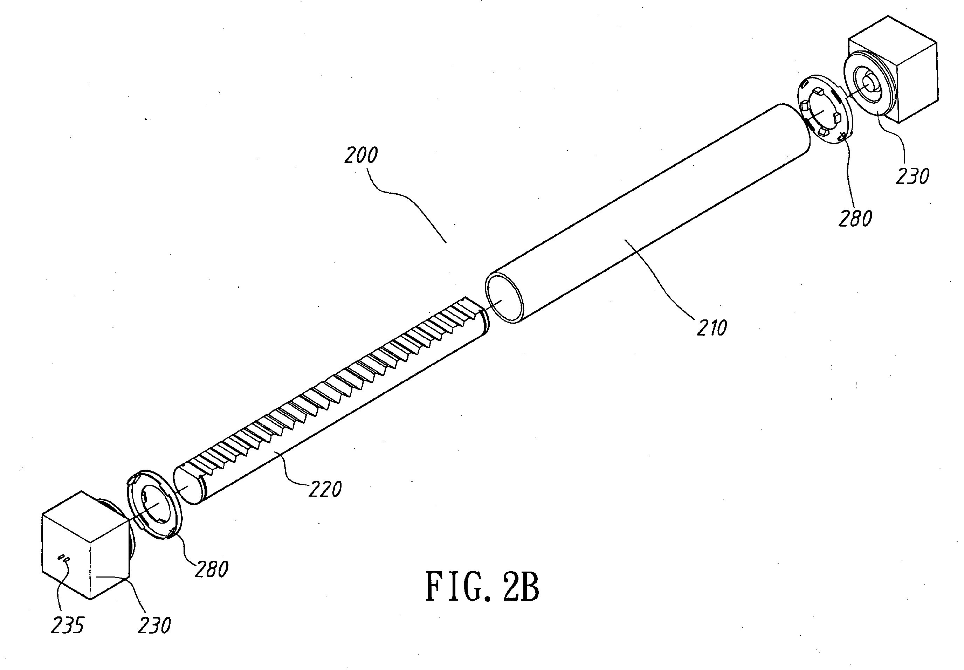

Refer to Figure 2A, which is a drawing illustrating a flicker-less light source according to an embodiment of the present invention, and to Figure 2B, which is a drawing illustrating an exploded view of a flicker-less light source according to an embodiment of the present invention.

As shown in Figure 2A and Figure 2B the flicker-less light source 200 comprises a diffuser tube 210, a lightpipe 220 inside the diffuser tube 210, and two LED light sources 230 one on each end of the diffuser tube 210. Each of the LED light sources 230 comprise electrical connectors 235 for allowing power to be applied to the LED light sources 230. A assembly couplers 280 hold the light source assembly together.

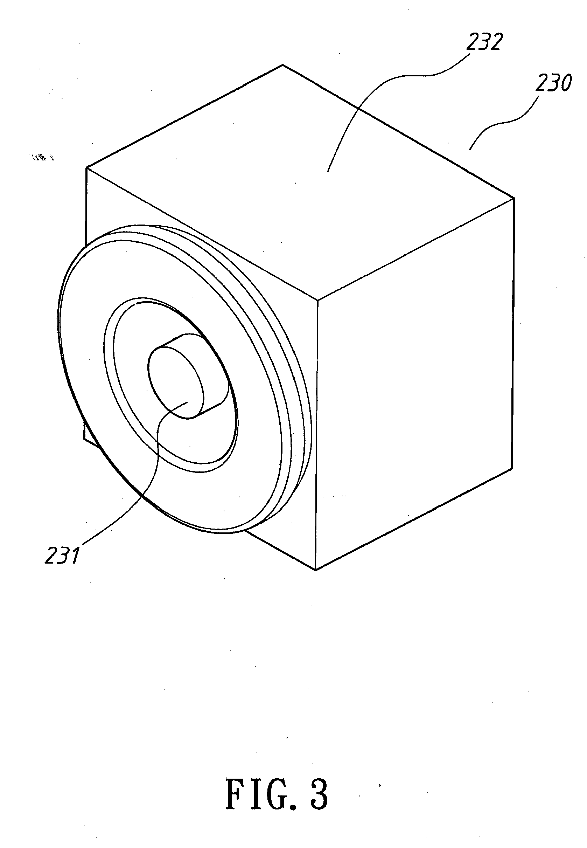

Refer to Figure 3, which is a drawing illustrating an LED light source according to an embodiment of a light source of the present invention. Each of the LED light sources 230 comprises at least one LED 231, a housing for holding the LED 232, and an electrical connector 235. In some embodiments of the present invention the LED light source further comprises an AC/DC voltage converter inside a portion of the housing 232.

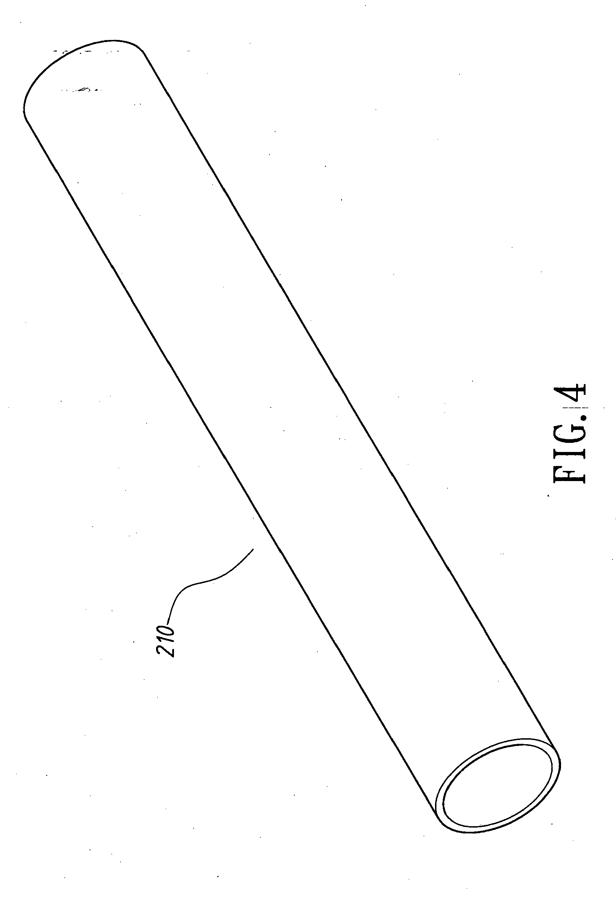

Refer to Figure 4, which is a drawing illustrating a diffuser tube of a flicker-less light source according to an embodiment of the present invention. The diffuser tube 210 comprises an elongated hollow tube of transparent, semi-transparent, or colored material. The material comprises, for example, plastic, acrylic, butyrate, polycarbonate, PETG, ETFE, or other material with suitable properties.

The diffuser tube 210 acts as a housing around the lightpipe. In embodiments of the present invention where the diffuser tube 210 comprises semitransparent material the diffuser tube 210 diffuses the light emitted from the LED light sources through the lightpipe. In embodiments of the present invention where the diffuser tube 210 comprises colored material the diffuser tube 210 further affects the light's color.

In an embodiment of the present invention the LED light source attaches to the diffuser tube 210. In another embodiment of the present invention the LED light source attaches to the diffuser tube 210 and the lightpipe.

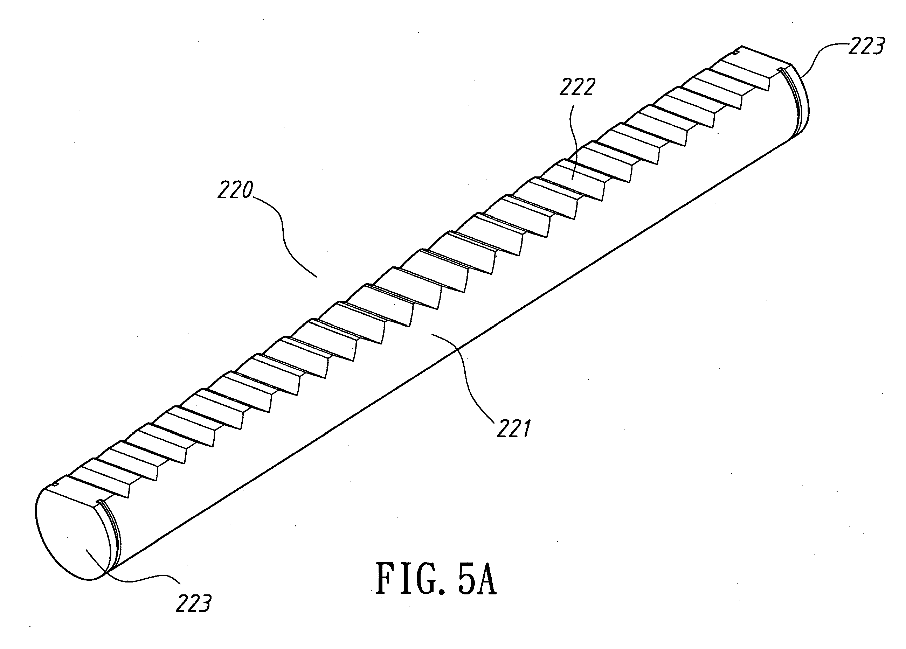

Refer to Figure 5A, which is a drawing illustrating a lightpipe of a flicker-less light source according to an embodiment of the present invention. As shown in Figure 5A, the lightpipe 220 comprises an elongated bar of transparent or semi-transparent material. The lightpipe 220 comprises a substantially smooth surface 221, two end surfaces 223, and a patterned surface 222. In some embodiments of the present invention the patterned surface 222 is a light reflecting surface. In some embodiments of the present invention the patterned surface 222 is a light diffusing surface.

The patterned surface 222 comprises a plurality of notches, indentations, dimples, curves, or other patterns to reflect, diffuse, or spread light emitted by the LED light sources that travels from the end surfaces 223 through the lightpipe 220. The pattern on the patterned surface 222 allows the light emitted by the flicker-less light source to have a uniform quality and intensity throughout the length of the light source.

In application, power is supplied to the LED light sources via the electrical connectors. The LEDs in the LED light sources turn on and emit light into the lightpipe through the end surfaces of the lightpipe. The light travels through the lightpipe and is emitted from the patterned surface of the lightpipe or reflected by the patterned surface of the lightpipe and emitted from the smooth surface of the lightpipe.

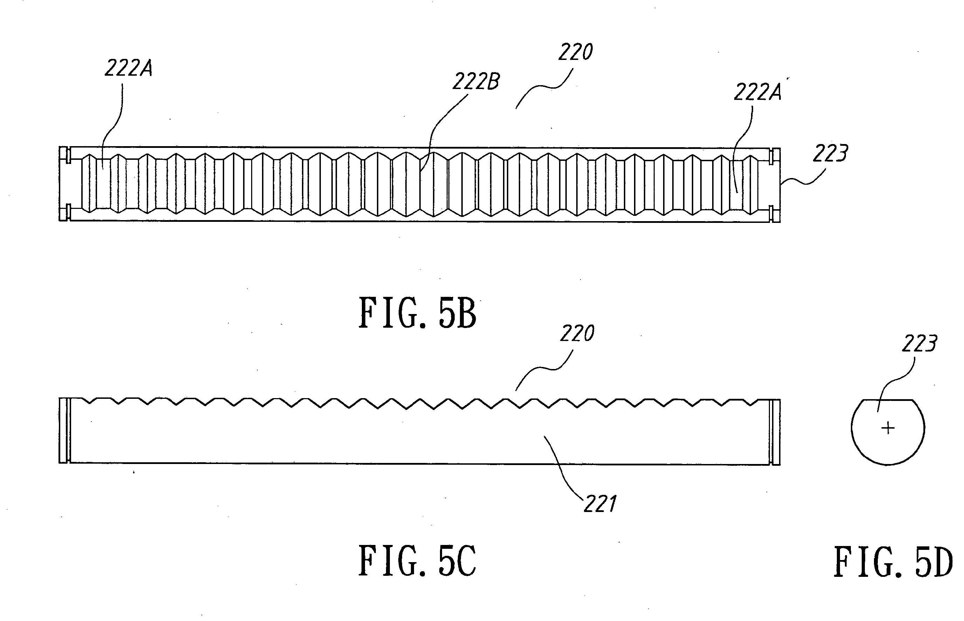

Refer to Figure 5B, which is a drawing illustrating a top view of a lightpipe with light diffusing surface according to an embodiment of a light source of the present invention, to Figure 5C, which is a drawing illustrating a side view of a lightpipe with light diffusing surface according to an embodiment of a light source the present invention, and to Figure 5D, which is a drawing illustrating an end view of a lightpipe with light diffusing surface according to an embodiment of a light source of the present invention.

As shown in Figure 5B, Figure 5C, and Figure 5D the patterned surface 222 of the lightpipe 220 comprises a pattern to reflect or diffuse light. In the embodiment illustrated in Figures 5B and 5C the pattern comprises a series of notches that are shallow indentations 222A on the ends of the lightpipe 220 and gradually increase in depth to become peaked notches 222B in the middle of the lightpipe 220. The pattern of the patterned surface 222 in this embodiment provides an optimal pattern to uniformly diffuse or reflect the light. Since the ends 223 of the lightpipe 220 are closer to the LED light sources more diffusion or reflection is needed. Further away from the LED light sources less diffusion or reflection is needed.

In other embodiments of the present invention other types of patterns for the patterned surface are used. For example, in an embodiment of the present invention only one LED light source is used. Therefore, the pattern comprises a gradually increasing notch depth from the end of the lightpipe nearest the LED light source to the end of the lightpipe the farthest away from the LED light source.

In another embodiment of the present invention, the pattern comprises elevated peaks that extend above the surface of the lightpipe. Unlike embodiments of the present invention comprising a pattern indented into the surface of the lightpipe, in this embodiment the pattern extends above the other surface of the lightpipe.

In another embodiment of the present invention the pattern on the patterned surface comprises a plurality of round dimples. Towards the end or ends of the lightpipe the dimples are small and increase in size towards the middle of the lightpipe. In another embodiment of the present invention the dimples vary in depth.

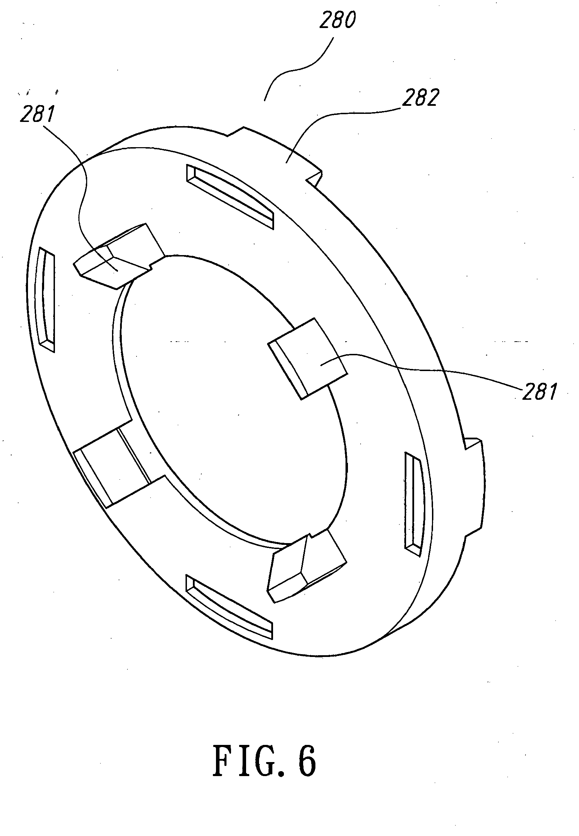

Refer to Figure 6, which is a drawing illustrating an assembly coupler according to an embodiment of a light source of the present invention.

In order to hold the light source assembly together, in some embodiments of the present invention an assembly coupler 280 is utilized. The assembly coupler 280 comprises a plurality of lightpipe tabs 281 and a plurality of LED light source tabs 282. When assembled the lightpipe is gripped by the inside of the lightpipe tabs 281 and the LED light sources are gripped by the LED light source tabs. The diffuser tube fits snuggly to the outer wall of the lightpipe tabs 281. While gripping the lightpipe the assembly coupler positions the lightpipe in the center of the diffuser tube and away from the walls of the diffuser tube.

In other embodiments of the present invention other means are used to hold the light source assembly together. For example, in an embodiment of the present invention the housing of the LED light source comprises a circular flange for holding the lightpipe and an extending wall for snuggly attaching to the diffuser tube.

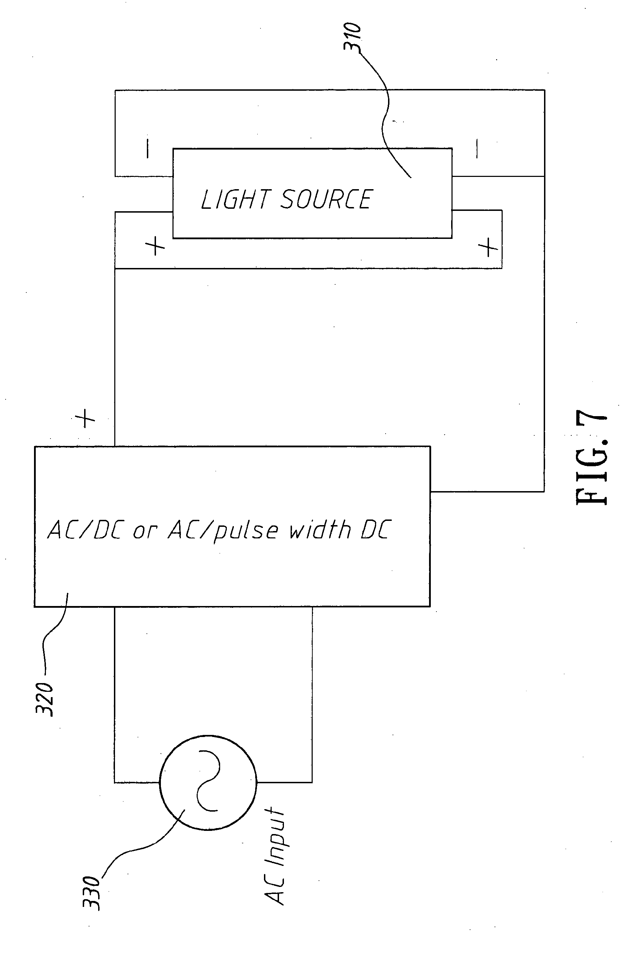

Refer to Figure 7, which is a drawing illustrating a light source of the present invention installed in a conventional fluorescent light fixture.

As shown in Figure 7, the flicker-less light source 310 of the present invention can be installed in a conventional light fixture. In this embodiment an AC/DC converter 320 converts the alternating current supplied by the power source 330 into direct current. The direct current is applied to the electrical connectors of the light source and the light source 310 turns on.

The present invention also provides a light source with selective wavelength conversion. The lightpipe is coated with a thin layer or layers of visible-light transparent material which is doped with organic dye molecules. The organic dye has strong light absorption characteristics in ultraviolet (UV) wavelength and certain short-wavelength visible spectral regions.

When the coated thin film is irradiated or pumped with light at theses wavelengths (λ₁) through the lightpipe, the electrons in the dye molecules jump from the ground state to the excited states at higher energy levels. The dye molecules decay from the excited state to the ground state occurs predominantly through radiative decay. Consequently, the dye molecules radiate very effectively at somewhat longer wavelengths (λ₂) than the pump wavelengths (λ₁).

By changing the doping concentration of the dye molecules in the thin film the coated thin film can become total opaque or semi-transparent to the pump wavelengths (λ₁). In the case of total opaque, the light emitted from the lightpipe through coated thin film will be only at wavelength λ₂. In the latter case (semi-transparent) the light emitted from the lightpipe through coated thin film will be a combination spectra of λ₁ + λ₂.

As a result, one type of LED light source can produce different light colors, brightness, or intensities. Therefore, manufacturers or suppliers only need to produce or stock one type of LED light source rather than a wide variety of light sources.

For example, if a blue LED light source is used, the doped coating or doped lightpipe can produce a yellow light to be emitted. In order to down-convert, the light source must be a higher energy color. For example, using blue which has higher energy as a light source and green red in the doping since it has lower energy in order to achieve the down-conversion.

In an embodiment of the present invention the outside surface of the lightpipe is doped to provide the selected wavelength conversion.

In another embodiment of the present invention the lightpipe material is doped throughout the material.

In an embodiment of the present invention LED light sources of different colors are used. By changing the doping of the coating a uniform light is emitted.

In an embodiment of the present invention a plurality of LEDs are used in each LED light sources. This provides flexibility in achieving desired light intensity or brightness.

In an embodiment of the present invention each LED light source comprises a blue LED, a red LED, and a green LED.

In an embodiment of the present invention the lightpipe is coated with a reflective coating. The reflective coating further enhances the efficiency of the light source by preventing light from escaping or being emitted from portions of the lightpipe.

In an embodiment of the present invention the power is not consistently applied. As a result the LED is not always on. Since LEDs have a fast response time the LED can be switched on and off in order to save power. In this embodiment the LED is switched on and off at a frequency that is undetectable by the human eye. For example, with an adequate pulse width modulation cycle time function added, the light source turns on and off at a high enough rate no be undetectable while saving power. In an embodiment of the present invention the electrical connector of the LED light source is compatible with a conventional incandescent light bulb fixture. In this embodiment the lightpipe and the diffuser covering the lightpipe cooperate to emit a uniform light. This embodiment provides an effective replacement for the conventional incandescent light bulb. The long lifetime and low power usage of the light source of the present invention far surpasses that of the common light bulb making it more practical and economical.

In an embodiment of the present invention the power supplied to the light source is DC power, for example, from a battery. This allows the light source to be portable or used in locations such as vehicles where DC power is available. In this embodiment an AC/DC converter is not necessary.

It will be apparent to those skilled in the art that various modifications and variations can be made to the present invention without departing from the scope of the claims. In view of the foregoing, it is intended that the present invention cover modifications and variations of this invention provided they fall within the scope of the claims and their equivalents.

## Claims

1. A light source comprising:
a diffuser (210);
a lightpipe (220) inside said diffuser (210); said lightpipe (220) comprising: a smooth surface (221) and a patterned surface (222) for diffusing or reflecting light; and
at least one light emitting diode light source (230) attached to each end of said lightpipe; **characterized in that** said patterned surface comprises a series of notches that are shallow indentations on the ends of said lightpipe and gradually increase in depth to become peaked notches in the middle of said lightpipe¸
and **in that**
the transversal cross section of the lightpipe (220) is comprising a circular section and a linear section, wherein the circular section corresponds to the smooth surface (221) and the linear section corresponds to the patterned surface (220).

2. The light source of claim 1, the single sided light emitting diode light source (230) comprising:
at least one light emitting diode;
a housing for holding the at least one light emitting diode; and
an electrical connector (235) for allowing power to be supplied to the at least one light emitting diode from a power source.

3. The light source of claim 1, the lightpipes (220) comprising a coating of visible-light transparent material doped with organic dye molecules.

4. The light source of claim 1, the lightpipes (220) comprising an organic dye coating with ultraviolet light absorption characteristics.

5. The light source of claim 1, the lightpipe (220) comprising a coating for selective wavelength conversion.

6. The light source of claim 5, the coating comprising a visible-light transparent material doped with organic dye molecules.

7. A light source comprising:
a diffuser (210);
a lightpipe (220) inside said diffuser (210), wherein said lightpipe (220) comprising a smooth surface and a patterned surface for diffusing or reflecting light; and
at least one light emitting diode light source (230) attached to said lightpipe;
**characterized in that** said patterned surface comprises a series of notches gradually increasing in notch depth farther away from an end of said lightpipe nearest said at least one light emitting diode light source,
**characterized in that**
the lightpipe (220) has a cross section comprising a circular section and a linear section, wherein the circular section corresponds to the smooth surface and the linear section correponds to the patterned surface.

8. The light source of claim 7, the single sided light emitting diode light source (230) comprising:
at least one light emitting diode;
a housing for holding the at least one light emitting diode; and
an electrical connector (235) for allowing power to be applied to the at least one light emitting diode from a power source.

9. The light source of claim 7, the lightpipe (220) comprising a coating of visible-light transparent material doped with organic dye molecules.

10. The light source of claim 7, the lightpipe (220) comprising an organic dye coating with ultraviolet light absorption characteristics.

11. The light source of claim 7, the lightpipe (220) comprising a coating for selective wavelength conversion.

12. The light source of claim 11 the coating comprising a visible-light transparent material doped with organic dye molecules.

## Patentansprüche

1. Lichtquelle, umfassend:
einen Diffusor (210),
ein Lichtröhre (220) innerhalb des Diffusors (210); wobei die Lichtröhre (220) eine glatte Oberfläche (221) und eine strukturierte Oberfläche (222) zum Zerstreuen oder Reflektieren von Licht umfasst; und
wenigstens eine als lichtemittierende Diode ausgebildete Lichtquelle (230), angeordnet an jedem Ende der Lichtröhre;
**dadurch gekennzeichnet, dass** die strukturierte Oberfläche eine Reihe von Einkerbungen aufweist, die flache Einkerbungen an den Enden der Lichtröhre sind und deren Tiefe sich graduell vergrößert, um in der Mitte der Lichtröhre tiefe Einkerbungen zu bilden,
und dadurch, dass
der transversale Querschnitt der Lichtröhre (220) einen kreisförmigen Abschnitt und einen linearen Abschnitt umfasst, wobei der kreisförmige Abschnitt der glatten Oberfläche (221) entspricht und der lineare Abschnitt der strukturierten Oberfläche (222) entspricht.

2. Lichtquelle nach Anspruch 1, wobei die als einseitig lichtemittierende Diode ausgebildete Lichtquelle (230) umfasst:
wenigstens eine lichtemittierende Diode;
ein Gehäuse zum Halten der wenigstens einen lichtemittierenden Diode; und
eine elektrische Verbindung (235), die es erlaubt, dass Leistung von einer Leistungsquelle zu der wenigstens einen lichtemittierenden Diode bereitgestellt wird.

3. Lichtquelle nach Anspruch 1, wobei die Lichtröhren (220) eine Beschichtung aus für sichtbares Licht transparentem Material, das mit organischen Farbstoffmolekülen dotiert ist, umfassen.

4. Lichtquelle nach Anspruch 1, wobei die Lichtröhren (220) eine Beschichtung aus organischem Farbstoff mit Eigenschaften der Absorption von ultraviolettem Licht umfassen.

5. Lichtquelle nach Anspruch 1, wobei die Lichtröhre (220) eine Beschichtung für selektive Wellenlängenkonversion umfasst.

6. Lichtquelle nach Anspruch 5, wobei die Beschichtung ein für sichtbares Licht transparentes Material, das mit organischem Farbstoffmolekülen dotiert ist, umfasst.

7. Lichtquelle, umfassend:
einen Diffusor (210);
eine Lichtröhre (220) innerhalb des Diffusors (210), wobei die Lichtröhre (220) eine glatte Oberfläche und eine strukturierte Oberfläche zum Zerstreuen oder Reflektieren von Licht umfasst; und
wenigstens eine als lichtemittierende Diode ausgebildete Lichtquelle (230), die an der Lichtröhre angebracht ist;
**dadurch gekennzeichnet, dass** die strukturierte Oberfläche eine Reihe von Einkerbungen umfasst, deren Tiefe sich graduell hinsichtlich weiter weg vom Ende der Lichtröhre am nächsten zur wenigstens einen als lichtemittierende Diode ausgebildeten Lichtquelle vergrößert,
**dadurch gekennzeichnet, dass**
die Lichtröhre (220) einen Querschnitt aufweist, der einen kreisförmigen Abschnitt und einen linearen Abschnitt umfasst, wobei der kreisförmige Abschnitt der glatten Oberfläche und der lineare Abschnitt der strukturierten Oberfläche entspricht.

8. Lichtquelle nach Anspruch 7, wobei die als einseitig lichtemittierende Diode ausgebildete Lichtquelle (230) umfasst:
wenigstens eine lichtemittierende Diode;
ein Gehäuse zum Halten wenigstens des einen Endes der lichtemittierenden Diode; und
eine elektrische Verbindung (235), die es erlaubt, dass Leistung von einer Leistungsquelle zu der wenigstens einen lichtemittierenden Diode geliefert wird.

9. Lichtquelle nach Anspruch 7, wobei die Lichtröhre (220) eine Beschichtung aus für sichtbares Licht transparentem Material, das mit organischen Farbstoffmolekülen dotiert ist, umfasst.

10. Lichtquelle nach Anspruch 7, wobei die Lichtröhre (220) eine Beschichtung aus organischem Farbstoff mit Eigenschaften der Absorption von ultraviolettem Licht umfasst.

11. Lichtquelle nach Anspruch 7, wobei die Lichtröhre (220) eine Beschichtung für selektive Wellenlängenkonversion umfasst.

12. Lichtquelle nach Anspruch 11, wobei die Beschichtung ein für sichtbares Licht transparentes Material, das mit organischen Farbstoffmolekülen dotiert ist, umfasst.

## Revendications

1. Source lumineuse comprenant :
un diffuseur (210),
une conduite de lumière (220) à l'intérieur dudit diffuseur (210), ladite conduite de lumière (220) comprenant une surface lisse (221) et une surface structurée (222) pour diffuser ou réfléchir de la lumière et
au moins une source lumineuse à diode émettrice de lumière (230) fixée à chaque extrémité de ladite conduite de lumière,
**caractérisée en ce que** ladite surface structurée comprend une série d'encoches qui sont des entailles peu profondes sur les extrémités de ladite conduite de lumière et qui augmentent graduellement en profondeur pour devenir des encoches qui culminent au milieu de ladite conduite de lumière et **en ce que** la section transversale de la conduite de lumière (220) comprend une section circulaire et une section linéaire, la section circulaire correspondant à la surface lisse (221) et la section linéaire correspondant à la surface structurée (220).

2. Source lumineuse selon la revendication 1, la source lumineuse à diode émettrice de lumière d'un seul côté (230) comprenant :
au moins une diode émettrice de lumière ;
un bâti pour tenir la diode émettrice de lumière qui existe au moins et
un connecteur électrique (235) pour permettre la fourniture d'électricité à la diode émettrice de lumière qui existe au moins à partir d'une source d'électricité.

3. Source lumineuse selon la revendication 1, les conduites de lumière (220) comprenant un revêtement de matériau transparent de lumière visible dopé avec des molécules de colorant organique.

4. Source lumineuse selon la revendication 1, les conduites de lumière (220) comprenant un revêtement de colorant organique avec des caractéristiques d'absorption de lumière ultraviolette.

5. Source lumineuse selon la revendication 1, la conduite de lumière (220) comprenant un revêtement pour une conversion de longueur d'onde sélective.

6. Source lumineuse selon la revendication 5, le revêtement comprenant un matériau transparent de lumière visible dopé avec des molécules de colorant organique.

7. Source lumineuse comprenant :
un diffuseur (210),
une conduite de lumière (220) à l'intérieur dudit diffuseur (210), ladite conduite de lumière (220) comprenant une surface lisse (221) et une surface structurée (222) pour diffuser ou réfléchir de la lumière et
au moins une source lumineuse à diode émettrice de lumière (230) fixée à chaque extrémité de ladite conduite de lumière,
**caractérisée en ce que** ladite surface structurée comprend une série d'encoches qui augmentent graduellement dans la profondeur d'encoche en s'éloignant d'une extrémité de ladite conduite de lumière au plus près de ladite source lumineuse à diode émettrice de lumière qui existe au moins,
**caractérisée en ce que** la conduite de lumière (220) a une section transversale qui comprend une section circulaire et une section linéaire, la section circulaire correspondant à la surface lisse et la section linéaire correspondant à la surface structurée.

8. Source lumineuse selon la revendication 7, la source lumineuse à diode émettrice de lumière d'un seul côté (230) comprenant :
au moins une diode émettrice de lumière ;
un bâti pour tenir la diode émettrice de lumière qui existe au moins et
un connecteur électrique (235) pour permettre la fourniture d'électricité à appliquer à la diode émettrice de lumière qui existe au moins à partir d'une source d'électricité.

9. Source lumineuse selon la revendication 7, la conduite de lumière (220) comprenant un revêtement de matériau transparent de lumière visible dopé avec des molécules de colorant organique.

10. Source lumineuse selon la revendication 7, la conduite de lumière (220) comprenant un revêtement de colorant organique avec des caractéristiques d'absorption de lumière ultraviolette.

11. Source lumineuse selon la revendication 7, la conduite de lumière (220) comprenant un revêtement pour une conversion de longueur d'onde sélective.

12. Source lumineuse selon la revendication 7, le revêtement comprenant un matériau transparent de lumière visible dopé avec des molécules de colorant organique.
